Europäisches Patentamt

European Patent Office

Office européen des brevets

(11) Veröffentlichungsnummer: **0 244 700 B1**

(12) **EUROPÄISCHE PATENTSCHRIFT**

(45) Veröffentlichungstag der Patentschrift: **04.03.92**

(21) Anmeldenummer: **87105932.5**

(22) Anmeldetag: **23.04.87**

(51) Int. Cl.⁵: **B60C 15/04**

(54) **Gummi-Luftreifen für Fahrzeuge und Verfahren zum Herstellen desselben.**

(30) Priorität: **03.05.86 DE 3615138**

(43) Veröffentlichungstag der Anmeldung:
**11.11.87 Patentblatt 87/46**

(45) Bekanntmachung des Hinweises auf die
Patenterteilung:
**04.03.92 Patentblatt 92/10**

(84) Benannte Vertragsstaaten:
**DE**

(56) Entgegenhaltungen:
**EP-A- 0 072 956**
**GB-A- 2 123 360**
**US-A- 4 320 791**

(73) Patentinhaber: **BENTELER AG**
**Residenzstrasse 1**
**W-4690 Paderborn-SchloB Neuhaus(DE)**

Patentinhaber: **Janus, Jonny**
**Kreuzstrasse 53**
**W-4000 Düsseldorf 1(DE)**

(72) Erfinder: **Janus, Jonny, Ing.**
**Kreuzstrasse 53**
**W-4000 Düsseldorf 1(DE)**
Erfinder: **Vaubel, Gert, Dr.rer.nat.habil.**
**Alte Warburger Strasse 14**
**W-3531 Warburg-Welda(DE)**
Erfinder: **Klatzer, Stefan, Dipl.-Ing.**
**Kessenbrockallee 14**
**W-4794 Schloss Neuhaus(DE)**
Erfinder: **Beckmann, Günter, Dr. Ing.**
**Im Geun 4**
**W-4358 Haltern(DE)**

(74) Vertreter: **Türk, Gille, Hrabal**
**Brucknerstrasse 20**
**W-4000 Düsseldorf 13(DE)**

## Beschreibung

Die Erfindung betrifft einen Gummi-Luftreifen für Fahrzeuge gemäß dem Oberbegriff des Patentanspruches 1. Außerdem betrifft die Erfindung ein Verfahren zum Herstellen derartiger Luftreifen.

Es ist aus der gattungsbildenden GB-A-2 123 360 bekannt, die in den Wulsten von Luftreifen angeordneten Kernringe aus Metall wie Stahl herzustellen, beispielsweise in Form von abschnittsweise gewickelten Drähten oder aus profiliertem Metallblech als sogenannte Profilringe. Diese Profilringe enthalten eine in sie eingelegte Wicklung aus einem oder mehreren Drähten, die, um eine bessere Haftung mit dem umgebenden Gummimaterial zu erzielen, beschichtet sein können. Diese Dräht sind relativ dick, so daß in den Profilringen nur wenige Wicklungen neben- bzw. übereinander angeordnet werden können. Die zwischen den Wicklungen vorhandenen großen Zwischenräume verursachen große Dichteinhomogenitäten über dem Querschnitt der Profilringe. Daraus ergeben sich die bekannten Nachteile wie Umwuchten und damit verbundene Einbußen der Komfort-Eigenschaften des Reifens.

Da Metall wie Stahl keine besondere Affinität zu dem Gummi von Luftreifen hat, ist die Verbindung der bekannten Kernringe mit dem Reifenmaterial problematisch. Die elastischen gebogenen einzelnen Drähte neigen infolge der Biegespannung dazu, sich zurückzustellen. Dies führt bei der Vulkanisation, also wenn der Kautschuk kurzzeitig flüssig wird, in ungünstigen Fällen zu einer konstruktiven Unordnung in den Kernringen. Hinzu kommt, daß der Kernring aufgrund seines vom übrigen Reifenmaterial deutlich abweichenden spezifischen Gewichtes und auch seiner speziellen Form eine Quelle für Unwuchten bildet, die sich um so stärker ungünstig auswirken, je leichter der Reifen sein soll und je höher die Laufgeschwindigkeit, die der Reifen aushalten soll, ist.

Da die herkömmlichen Kernringe von den einlaufenden Enden der Karkass-Einlage umschlagen werden,ergeben sich versteifte Wulstbereiche, die weit in die seitlichen Flanken des Reifens reichen, so daß damit die Komfort-Eigenschaften des Reifens leiden.

Der Erfindung liegt die Aufgabe zugrunde, einen Gummi-Luftreifen für Fahrzeuge zu schaffen, der in seinen Wulsten verbesserte Kernringe aufweist, die sich einerseits gut und dauerhaft im sie umgebenden Material integrieren lassen und andererseits leichter und gleichförmiger als bisher bekannte Kernringe ausgebildet werden können.

Weiterhin soll der Kernring so ausgebildet werden, daß er das um ihn geschlagene Ende der Karkass-Einlage ausreichend festhalten und ein Rückformen des Umschlages der Karkass-Einlage während des Vulkanisierens in der Reifenpresse mit Sicherheit verhindern kann.

Außerdem soll durch eine verbesserte Flexibilität der Wulste die Handhabung des Luftreifens während der Montage erleichtert werden. Schließlich soll durch Reduzierung der notwendigen konstruktiven Höhe der Karkass-Lagerung Spielraum geschaffen werden, um entweder bei gleicher Reifenquerschnittshöhe mehr Federungskomfort zu schaffen oder bei gleichbleibendem Federungskomfort die Querschnittshöhe des Reifens zugunsten eines größeren Felgen- bzw. Bremsendurchmessers zu reduzieren.

Diese Aufgabe wird bei einem Gummi-Luftreifen der eingangs genannten Gattung mit den Merkmalen des kennzeichnenden Teiles des Anspruches 1 gelöst. Vorteilhafte Ausgestaltungen sowie ein Verfahren zur Herstellung eines erfindungsgemäßen Gummi-Luftreifens sind Gegenstand der abhüngigen Ansprüche.

Der Profilring ist einerseits aus mit dem Gummi des Luftreifens verträglichem zähem Material ausgebildet, d.h., aus Material, das sich dauerhaft mit dem Gummi verbinden läßt, so daß Ablösungserscheinungen und Materialbrüche zwischen dem Reifenmaterial und den Kernringen auch unter Einfluß von im Betrieb auftretenden Walkarbeiten nicht zu befürchten sind. Hinzu kommt, daß der erfindungsgemäße Profilring eine Wicklung aus Strangmaterial enthält, die im Gegensatz zu den bisher bekannten Kernringen sozusagen endlos gewickelt ist und dementsprechend so gut wie keine Stoßstelle aufweist, die Unwuchten hervorrufen kann. Vielmehr ist die Wicklung aus vorzugsweise superfeinem Strangmaterial oder Fasern unter Verwendung von zunächst flüssigem und später gelierendem Bindemittel wie flüssigem Kautschuk derart in den formstabilen Profilring eingelegt, daß dieser zu einem undehnbaren Ring zusammengehalten ist, ohne daß es notwendig wäre, die Enden des den Profilring bildenden Profilmaterials an einer Stoßstelle dauerhaft miteinander zu verbinden. Somit kann auch durch den Profilring keine Unwucht entstehen.

Diese elastische aber inkompressible Matrix verhindert eine Verschiebung der Filamente gegeneinander und sorgt so für eine ausreichende innere Festigkeit des Faserbündels.

Das die Wicklung bildende Faser- oder Strangmaterial kann ein Faden, eine FAdenschar, ein Garn, eine Litze, ein Monofil oder auch ein Multifil-Garn (6 bis 20 $\mu$) sein, ebenso aber auch ein aus mehreren Strängen verzwirnter Faden oder ein schmales Band. Wichtig ist, daß die Wicklung aus einer verhältnismäßig großen Anzahl feinster Filamente und Windungen besteht, um dem Kernring die notwendige Festigkeit, Flexibilität und Sicherheit zu geben. Der formstabile biegesteife Profilring verleiht dem Kernring die gewünschte äußere Gestalt und schützt das in ihn eingewickelte Strangmaterial gegen direkte Knickbeanspruchung sowohl in radialer als auch in axialer Richtung des Luftreifens, während das Strangmaterial für den Zusammenhalt des Profilringes und die notwendige Stabilität gegen Dehnungen sorgt.

Vorzugsweise ist der erfindungsgemäße Kernring mit einem die zum Einwickeln des Strangmaterials zunächst offene Seite des Profilringes umschließenden Abdeckung versehen, beispielsweise in Form eines Ringes, der bandförmig sein kann. Diese Abdeckung wird auf den Kernring aufgebracht, nachdem das Strangmaterial in den Profilring eingewickelt worden ist. Dabei befindet sich die Abdeckung vorzugsweise in einem derartigen radialen Abstand von der im Profilring liegenden Wicklung, daß eine zwischen beiden vorgesehene Karkass-Einlage des Luftreifens festgehalten wird, damit der Umschlag der Karkass-Einlage bei der Fertigstellung des Reifens, nämlich der Bombage und dem Vulkanisieren, sich nicht vom Kernring lösen kann. Die Abdeckung kann dabei mit dem Profilring formschlüssig verbunden werden, beispielsweise durch eine bestimmte Profilierung der Abdeckung und/oder des Profilringes. Ferner kann die Abdeckung eine weitere Profilierung aufweisen, die sich in Richtung zur im Profilring befindlichen Wicklung erstreckt, um eine Art formschlüssige Verbindung zwischen der Abdeckung und der unter sie gesteckten Karkass-Einlage zu erzielen.

Obwohl der Profilring und der Abdeckring vorzugsweise aus - gegebenenfalls profilierten - vollem Flachmaterial bestehen, können dieselben je nach der Verbindbarkeit ihres Materials mit Gummi auch Durchlässe aufweisen, durch die das Gummimaterial durchgreifen kann. Dabei ist es auch möglich, daß der Abdeckring aus einem Gewebeband oder einem siebförmigen Band besteht.

Vorzugsweise besteht wenigstens der Profilring und vorzugsweise auch der Abdeckring aus Kunststoff, dessen spezifisches Gewicht zwischen 1 und 1,5 und besonders vorteilhaft 1 bis 1,2 liegt. Dementsprechend kann auf Metall wie Stahl für den Kernring ganz verzichtet werden.

Das in den Profilring gewickelte Strangmaterial ist vorzugsweise hoch zugfestes Faden- oder Garnmaterial, beispielsweise ganz oder überwiegend aus Kohlenstoff- oder Aramid-Fasern, und sollte ein spezifisches Gewicht zwischen 1,3 bis 2,6 und vorzugsweise von 1,5 aufweisen.

Dementsprechend erhält man wegen der Verwendung feiner Filamente mit verhältnismäßig wenig Materialaufwand eine hochfeste, aber ungewöhnlich flexible Wicklung im Kernring, welche diesem die notwendige Stabilität gegen unerwünschte Dehnungen verleiht. Der diese Wicklung umschließende Profilring und gegebenenfalls auch der Abdeckring schützen derartiges Faden- oder Strangmaterial, das hochgradig knickempfindlich sein kann, gegen ungünstige Belastungen, die von der um den Kernring geschlagenen Karkass-Einlage insbesondere bei der Bombage des Luftreifens, bei der Vulkanisationsbehandlung in der Mulde der Reifenformpresse oder bei der Montage ausgehen können.

Bestehen die einzelnen Bestandteile des Kernringes aus den vorstehend genannten Materialien, so hat der Kernring ein ähnliches oder nahezu gleiches spezifisches Gewicht wie der Gummi des Luftreifens. Dementsprechend läßt sich der Kernring nicht nur ablösefest im betreffenden Reifenwulst verankern, sondern auch nach dem spezifischen Gewicht im Reifenmaterial integrieren, so daß der Wulstkernring keine unerwünschten Unwuchten hervorrufen kann, die sich bei bekannten Kernringen aufgrund von Gewichtskonzentrationen bzw. Gewichtsschwerpunkten wegen des höheren spezifischen Gewichtes immer wieder einstellen.

Gemäß einem bevorzugten praktischen Ausführungsbeispiel der Erfindung bildet der Profilring eine Art Mulde oder Vertiefung zur Aufnahme des in ihn gewickelten Faser- oder Strangmaterials. Somit kann das Strangmaterial fast vollständig vom Profilring umschlossen werden. Dementsprechend wird es vom Profilring weitgehend gegen unmittelbaren Kontakt mit der um den Kernring umgeschlagenen Karkass-Einlage abgeschirmt. Die von der Karkass-Einlage ausgehenden Zugkräfte oder dergleichen werden weitgehend auf den Profilring übertragen, der aufgrund seiner muldenartigen Form verhindert, daß derartige Kräfte schädliche Knickbeanspruchungen auf das eingewickelte Faser- oder Strangmaterial ausüben. Der Profilring ist dabei so geformt, daß die Karkass-Einlage um seine Außenseite herumgelegt werden kann, d.h. der Profilring weist keine scharfen Kanten oder Ecken auf, die zu ungünstigen Beanspruchungen der Karkass-Einlage führen würden, sondern eine einen weichen Einlauf ermöglichende Kontur.

Andererseits ist der Kernring derart ausgebildet, daß er das um ihn geschlagene Ende der Karkass-Einlage ausreichend fest halten kann, um ein Rückformen des Umschlages der Karkass-Einlage auch während des Vulkanisierens in der Reifenformpresse mit Sicherheit zu verhindern. Besonders vorteilhaft ist diese Ausführungsform auch für Stahlcord-Karkassen, wie sie beispielsweise in LKW-Reifen eingesetzt werden. Dies wird dadurch erreicht, daß der eine Art Bandage bildende Abdeckring eine gewisse Klemmwirkung auf das in dem erfindungsgemäßen Kernring steckende Ende der Karkass-Einlage ausübt, was durch eine entsprechende Dimensionierung des Durchmessers des Abdeckringes (Spannung) und gegebenenfalls eine gewisse Profilierung der auf die Karkass-Einlage einwirkenden Fläche des Abdeckringes erzielt wird, um ein Abrutschen zu verhindern.

Ein bevorzugtes Verfahren zum Herstellen derartiger Luftreifen ist Gegenstand der Ansprüche 16 bis 21.

In der Zeichnung sind Ausführungsbeispiele eines erfindungsgemäßen Kernringes für Gummi-Luftreifen schematisch und stark vergrößert dargestellt, und zwar zeigt

Fig. 1      einen Querschnitt durch eine erste Ausführungsform des Kernringes,

Fig. 2      einen Längsschnitt nach Linie II-II in Fig 1,

Fig. 3      einen Querschnitt durch eine abgewandelte Ausführungsform des Kernringes,

Fig. 4      einen Querschnitt einer weiteren abgewandelten Ausführungsform des Kernringes,

Fig. 5      einen Querschnitt noch einer anderen Ausführungsform des Kernringes, wobei angedeutet ist, wie die um den Kernring zu schlagende Karkass-Einlage an diesem befestigt wird,

Fig. 6      einen Querschnitt einer fünften Ausführungsform des Kernringes, wobei das eingeschlagene Ende der Karkass-Einlage aus dem Kernring herausragt, und

Fig. 7      eine schaubildliche Ansicht eines Gummi-Luftreifens, wobei der eine der beiden einen erfindungsgemäßen Kernring enthaltenden Reifenwulste zu erkennen ist.

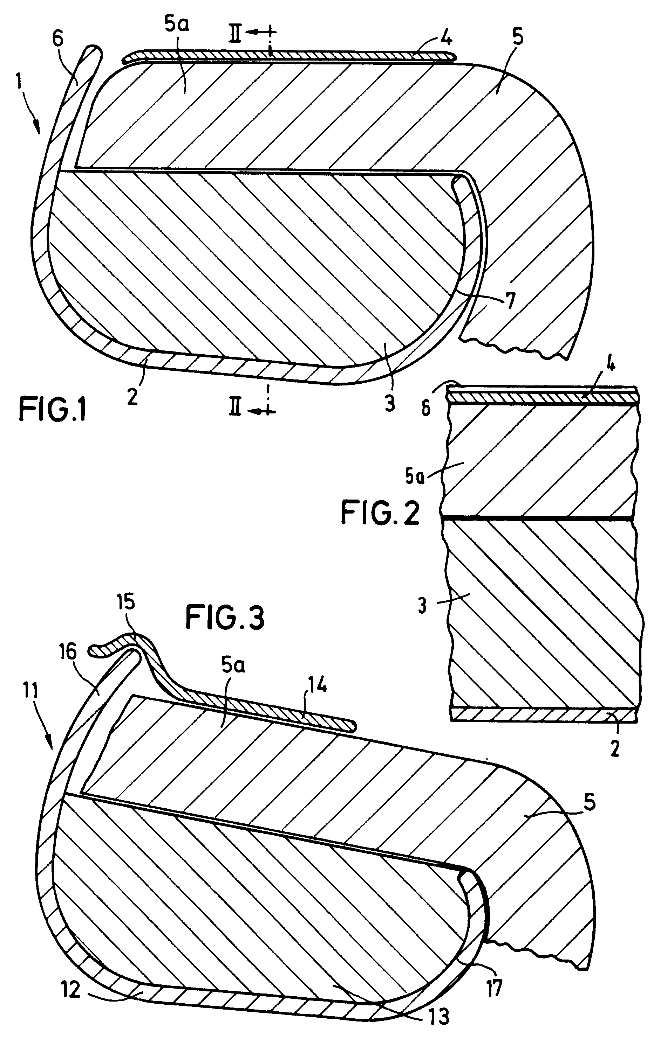

Der in Fig. 1 und 2 dargestellte Kernring (1) besteht aus einem äußeren formstabilen Profilring (2), einer in diesen eingelegten Wicklung (3) aus im einzelnen hier nicht dargestelltem feinem Strangmaterial, das im Querschnitt eine homogene Masse bildet, und einem bandagenförmigen Abdeckring (4). Um den Kernring (1) ist eine Karkass-Einlage (5) gewickelt bzw. geschlagen, deren Enden (5a) zwischen Abdeckring (4) und Wicklung (3) gehalten, beispielsweise festgeklemmt ist. In der Zeichnung sind lediglich zur besseren Erkennbarkeit zwischen der Karkass-Einlage (5) bzw. deren Ende (5a) und den Teilen des Kernringes (1) Abstände zu erkennen. Tatsächlich liegt aber die Karkass-Einlage (5) sowohl auf der abgerundete Flanken aufweisenden Außenseite des Profilringes (2) als auch auf der im Profilring (3) befindlichen Wicklung vollfächig auf, während der Abdeckring (4) mit einer gewissen Vorspannung von außen auf das im Profilring (2) steckende Ende (5a) der Karkass-Einlage (5) drückt, um dieses Ende am Kernring (1) festzuhalten.

Der Profilring (2) ist an der Einlaufseite der Karkass-Einlage (5) mit einem hochstehenden Steg (6) in Form eines gebogenen Hornes versehen, der das eingesteckte Ende (5a) der Karkass-Einlage (5) schützt und gewährleistet, daß die Karkass-Einlage ohne Knickgefahr um den Kernring geschlagen werden kann.

Die im Profilring (2) befindliche Wicklung (3) füllt eine vom Profilring (2) aufgrund seiner speziellen Form gebildete Mulde (7) weitgehend aus, so daß das Ende (5a) der Karkass-Einlage (5) flach auf der Wicklung (3) aufliegt und sich bis zum hornartigen STeg (6) erstreckt (Fig. 1).

Die Ausführungsform gemäß Fig. 3 unterscheidet sich von dem Kernring gemäß Fig. 1 im wesentlichen dadurch, daß dieser Kernring (11) eine Wicklung (13) enthält, welche die Mulde (17) des Profilringes (12) derart ausfüllt, daß das im Kernring (11) steckende Ende (5q) der Karkass-Einlage (5) im Kernring (11) flach liegend mit leichter Neigung in Richtung zum hornartigen Steg (16) des Profilringes (12) verläuft. Ferner unterscheidet sich diese Auffürungsform des Kernringes dadurch, daß der Abdeckring (14) konisch ausgebildet ist und eine nasenartige Profilierung (15) aufweist, die nach Art einer Schnappverbindung auf das äußere Ende des Steges (16) des Profilringes (12) paßt und somit eine formschlüssige Verbindung zwischen Profilring (12) und Abdeckring (14) herstellt.

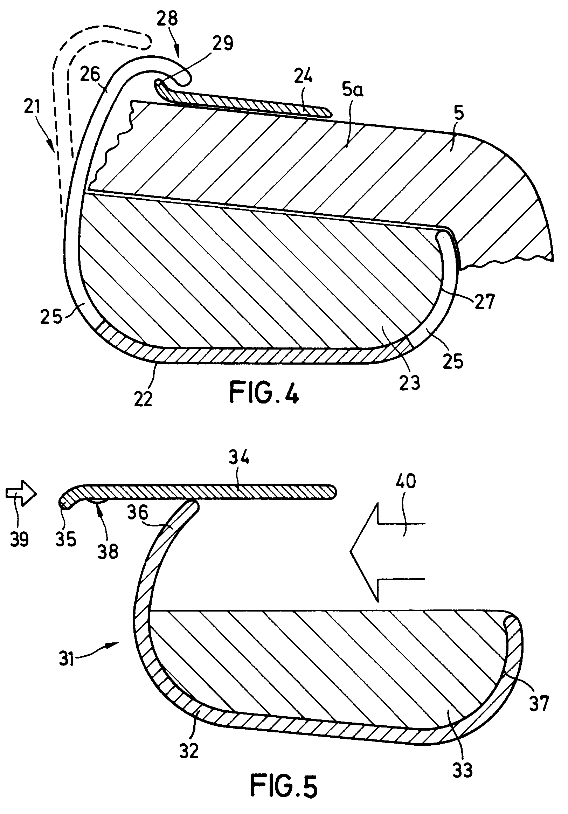

Bei der Ausführungsform gemäß Fig. 4 ist der Profilring (22) des Kernringes (21) im Bereich seines hornartigen Steges (26) mit einer übergreifenden Verlängerung (28) versehen, die nach Art einer Schnapp-Sicherung den konischen Klemmring (24) übergreifen kann, der zu diesem Zweck einen hochstehenden Steg (29) aufweist. Dabei enthält der Profilring (22) radiale Einschnitte oder Schlitze (25), um seine Biegsamkeit zu verbessern.

Die vom Profilring (22) gebildete Mulde (27) ist ähnlich wie bei der Ausführungsform gemäß fig. 3 mit einer Wicklung (23) gefüllt. Die Wicklung (23) ist vorzugsweise aus einem einzigen Faden oder auch Strang, der aus mehreren Fäden oder dergleichen gebildet sein kann, gewickelt, so daß man praktisch eine endlose Wicklung erhält, die so gut wie dehnungsfrei und aufgrund der superfeinen Querschnitte der einzelnen Filamente außerordentlich biegsam ist, so daß die Bruchgefahr sehr gering und die Stabilität und Sicherheit des Kernringes sehr hoch ist. Da die Wicklung (23) praktisch endlos ist, ergeben sich keine Verbindungsstellen, die zu Materialschwächungen und Unwuchten führen können.

Der in Fig. 5 dargestellte Kernring (31) ist ähnlich wie der Kernring gemäß Fig. 1 ausgebildet, jedoch hat der Abdeckring (34) eine über das obere Ende des hornartige Steges (36) des Profilringes (32) übergreifende Nase (35) und ferner an der Unterseite einen oder mehrere vorstehende Sicherungsnoppen (38), so daß der Abdeckring (34), wenn er in Richtung des Pfeiles (39) vollständig auf den Profilring (32) aufgeschoben worden ist, eine formschlüssige Schnappverbindung zum Profilring (32) bildet und dementsprechend gegen Abrutschen gesichert ist.

Bei der Montage wird zunächst das in Fig. 5 nicht dargestellte Ende der um den Kernring (31) geschlagenen Karkass-Einlage in Richtung des Pfeiles (40) auf die in der Mulde (37) des Profilringes (32) befindliche Wicklung (33) aufgeschoben, bis sein Ende nahe an der Innenseite des Steges (36) des Profilringes (32) liegt. Dann wird der Klemmring (34) in Gegenrichtung gemäß Pfeil (29) auf den Profilring (32) und das eingelegte Ende der Karkass-Einlage aufgeschoben, um nach Art eines Klemmringes das Ende der Karkass-Einlage auf die Wicklung (33) zu drücken und somit am Profilring festzuhalten.

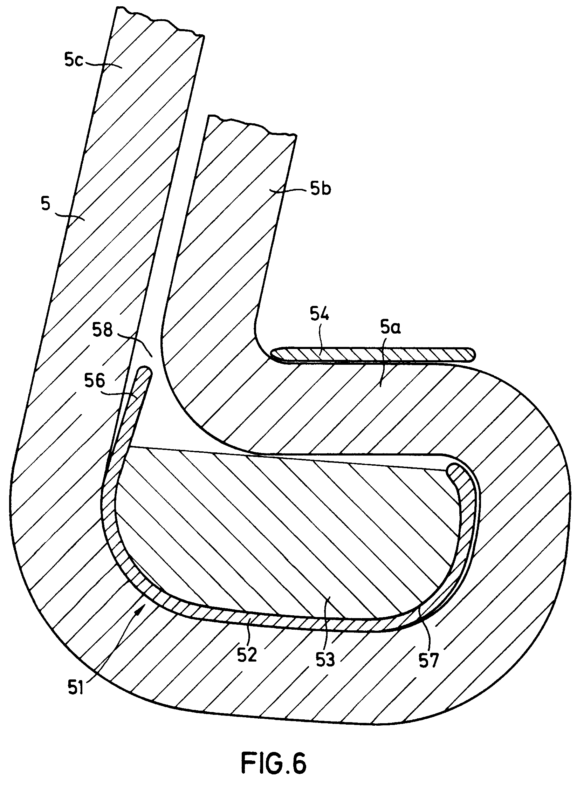

Bei der in Fig. 6 dargestellten Ausführungsform weist der Kernring (51) einen Profilring (52) auf, der ähnlich wie der in Fig. 1 dargestellte Profilring ausgebildet ist und eine Mulde (57) bildet, in der sich eine Wicklung (53) aus hochfestem Faser- oder Garnmaterial befindet. An der Einlaufseite der Karkass-Einlage (5) befindet sich ein hornartig ausgebildeter hochstehender Steg (56) mit gebogener oder gewölbter Kontur, so daß die Karkass-Einlage (5) mit angemessener Biegung um den Kernring (51) gelegt und derart zurückgeschlagen werden kann, daß ihr eingeschlagenes Ende (5a) sich auf die flach ausgebildete Oberseite der Wicklung (53) legt.

Auf der Außenseite des Kernringes (51) befindet sich wiederum ein Abdeckring (54), der das eingeschlagene Ende (5a) der Karkass-Einlage (5) mit einer gewissen Vorspannung auf die in der Mulde (57) des Profilringes (52) befindliche Wicklung (53) drückt und somit festhält. Zwischen dem Abdeckring (54) und dem hochstehenden Steg (56) des Profilringes (52) befindet sich eine Öffnung (58), durch die das äußerste Ende (5b) des eingeschlagenen Endes (5a) der Karkass-Einlage (5) paßt. Dieses äußerste Ende (5b) ist derart durch die Öffnung (58) geführt, daß es sich parallel zum aus der Reifenflanke kommenden Abschnitt (5c) der Karkass-Einlage (5) erstreckt und in dessen unmittelbarer Nähe verläuft, wie Fig. 6 zeigt.

Bei der in Fig. 6 gezeigten Ausführungsform des Kernringes ist das eingeschlagene Ende (5a) der Karkass-Einlage (5) besonders sicher am Kernring gehalten.

Poly - 2,6 - dimethyl - 1,4 - phenylenäther hat sich als für den Profilring besonders geeigneter Kunststoff erwiesen.

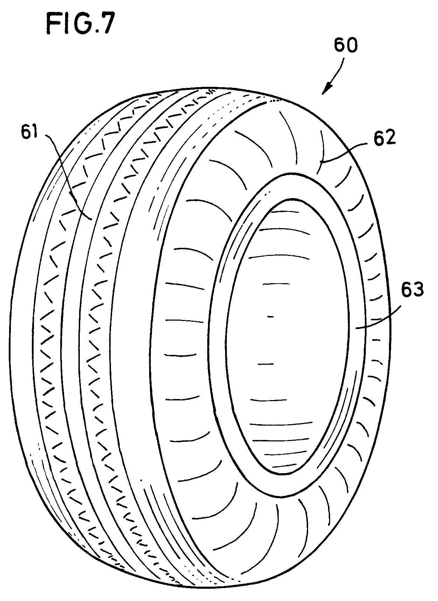

Fig. 7 zeigt einen vollständigen Gummi-Luftreifen (60), der eine äußere ringförmige Lauffläche (61) aufweist, die an beiden Seiten in gewölbte Flanken (62) übergehen, welche ihrerseits jeweils in einem ringförmigen Wulst (63) enden, der zum Aufliegen auf einer nicht dargestellten Felge eines Fahrzeugrades bestimmt ist und in den ein erfindungsgemäßer Kernring eingebettet ist.

**Patentansprüche**

1. Gummi-Luftreifen für Fahrzeuge, mit zwei auf der eines Rades auflegbaren Wulsten, in denen jeweils ein einen Profilring (2, 12, 22, 32, 52) aufweisender Kernring eingebettet ist, um den eine in den Gummi mit einem Ende eingebettete Karkass-Einlage (5) zum Verankern derselben gelegt ist, wobei jeder Profilring (2; 12; 22; 32; 52) eine offene Seite mit einer in ihn eingelegten Wicklung (3; 13; 23; 33; 53) aus hochfesten Strangmaterial aufweist, **dadurch gekennzeichnet,** daß das Strangmaterial aus Fasern besteht und daß über der offenen Seite des Profilringes (2; 12; 22; 32; 52), welcher aus einem sich mit dem Gummi chemisch verbindenden Werkstoff besteht, eine Abdeckung (4; 14; 24; 34; 54) angeordnet ist, die aus einem den Profilring (2; 12; 22; 32; 52) zu einem seitlich offenen Profil ergänzenden bandförmigen oder flachen Ring (4; 14; 24; 34; 54) besteht, der einen derartigen Durchmesser aufweist, daß er mit Vorspannung auf dem betreffenden im Kernring (1; 11; 21; 31; 51) steckenden Ende (5a) der Karkass-Einlage (5) zum Halten desselben klemmend aufliegt.

2. Luftreifen nach Anspruch 1, dadurch gekennzeichnet, daß der flache Ring (14; 24; 34) der Abdeckung und der Profilring (22) formschlüssig miteinander verbindbar ausgebildet sind.

3. Luftreifen nach einem der Ansprüche 1 oder 2, dadurch gekennzeichnet, daß der Profilring (2; 12; 22; 32; 52) und/oder der Abdeckring (4; 14; 24; 34; 54) aus Kunststoff besteht.

4. Luftreifen nach einem der Ansprüche 1 bis 3, dadurch gekennzeichnet, daß Profilring (2; 12; 22; 32; 52) und/oder Abdeckung (4; 14; 24; 34; 54) eine etwa gleichförmige Wandstärke bis etwa 2mm aufweist.

5. Luftreifen nach einem der Ansprüche 1 bis 4, dadurch gekennzeichnet, daß der Profilring (22) und/oder der Abdeckring (4; 54) Durchlässe enthält.

6. Luftreifen nach Anspruch 5, dadurch gekennzeichnet, daß der Abdeckring (4; 54) ein offenes Gewebe oder Sieb ist.

**7.** Luftreifen nach einem der Ansprüche 1 bis 6, dadurch gekennzeichnet, daß die Wicklung (3; 13; 23; 33; 53) im Querschnitt in radialer Richtung eine geringere Ausdehnung als in lateraler Richtung aufweist.

**8.** Luftreifen nach einem der Ansprüche 1 bis 7, dadurch gekennzeichnet, daß das Strangmaterial (30) aus hochfesten Fasern wie Kohlenstoff- oder Aramid-Fasern besteht, beispielsweise als Roving, Faden oder Garnmateril.

**9.** Luftreifen nach einem der Ansprüche 1 bis 8, dadurch gekennzeichnet, daß die Teile jedes Kernringes (1; 11; 21; 31) aus Material bestehen, welches ein ähnliches oder gleiches spezifisches Gewicht wie der Gummi des Luftreifens aufweist.

**10.** Luftreifen nach einem der Ansprüche 1 bis 9, dadurch gekennzeichnet, daß der Profilring (2; 12; 22; 32) eine abgerundete Mulde (7; 17; 27; 37) zur Aufnahme des in ihn gewickelten Strangmaterials (30) bildet.

**11.** Luftreifen nach Anspruch 10, dadurch gekennzeichnet, daß die Mulde (7; 17; 27; 37) teilweise mit dem gewickelten Strangmaterial (30) gefüllt ist.

**12.** Luftreifen nach einem der Ansprüche 1 bis 11, dadurch gekennzeichnet, daß der Profilring (2; 12; 22; 32) im Querschnitt U- oder L-förmig an der Einlaufseite der Karkasse (5) mit einem hochstehenden Horn (6; 16; 26; 36) versehen ist und abgerundete Flanken aufweist.

**13.** Luftreifen nach einem der Ansprüche 1 bis 12, dadurch gekennzeichnet, daß der Abdeckring (54) derart angeordnet ist, daß sich zwischen diesem und dem hochstehenden Steg (56) an der Einlaufseite des Profilringes (52),an der die Karkasse auf den Profilring aufläuft, eine Öffnung (58) befindet, durch die das eingeschlagene Ende (5a, 5b) der Karkass-Einlage (5) dicht an der einlaufenden Karkass-Einlage (5c) zurückgeführt ist (Fig. 6).

**14.** Luftreifen nach einem der Ansprüche 1 bis 13, dadurch gekennzeichnet, daß der aus Kunststoff bestehende Profilring (2; 12; 22; 32; 52) ein spezifisches Gewicht zwischen 1 und 1,5 und vorzugsweise 1 bis 1,2 und das Strangmaterial der Wicklung (3; 13; 23; 33; 53) ein spezifisches Gewicht zwischen 1,3 und 2,6, vorzugsweise 1,5, aufweist.

**15.** Luftreifen nach einem der Ansprüche 1 bis 14, dadurch gekennzeichnet, daß der Profilring (2; 12; 22; 32; 52) aus PPE-haltigem Material besteht.

**16.** Verfahren zum Herstellen von Gummiluftreifen nach einem der Ansprüche 1-15, bei dem in jedem Wulst ein Kernring eingebettet wird, um den eine Seite der Karkasse gelegt wird und das Ganze in Kautschukmaterial eingebaut wird und der so hergestellte Reifenrohling vulkanisiert wird, dadurch gekennzeichnet, daß in den Profilring eine Wicklung aus synthetischem Strangmaterial eingelegt wird und das Fasermaterial der Wicklung vor dem Einwikkeln in den Profilring mit einem zunächst flüssigen, später gelierenden und zu einer Matrix ausvulkanisierenden Material getränkt wird.

**17.** Verfahren nach Anspruch 16, dadurch gekennzeichnet, daß man als zu einer Matrix ausvulkanisierendes Material ein funktionalisiertes Polybutadien verwendet, um ein gegenseitiges Verschieben der Fasern und/oder Filamente zu verhindern.

**18.** Verfahren nach Anspruch 16 oder 17, dadurch gekennzeichnet, daß die Oberfläche des Profilringes vor dem Anbringen der Karkasse mit SBR (Styrol-Butadien-Rubber)-haltigem Material beschichtet wird.

**19.** Verfahren nach einem der Ansprüche 16 bis 18, dadurch gekennzeichnet, daß eine Karkasse mit SBR-haltigem Kautschukmaterial verwendet wird.

**20.** Verfahren nach einem der Ansprüche 16 bis 19, dadurch gekennzeichnet, daß nach dem Einlegen der Wicklung in den Profilring auf die Wicklung eine Abdeckung in Form eines Ringes, aufgebracht wird.

**21.** Verfahren nach Anspruch 20, dadurch gekennzeichnet, daß die Abdeckung von der Seite bzw. in axialer Richtung des Profilringes auf diesen aufgeschoben wird.

**Claims**

**1.** Pneumatic rubber tyre for vehicles comprising a pair of beads to be placed on the rim of a vehicle wheel, said beads each comprising a core ring provided with a profiled ring (2; 12; 22; 32; 52) around which is located a carcass inlet (5), one end of which extends into the rubber for anchoring said carcass inlet (5), wherein each of said profiled rings (2; 12; 22;

32; 52) has an open end enclosing a coiling (3; 13; 23; 33; 53) made of highly resistant extruded material,
**characterized in that**
said extruded material consists of fibers and that the open end of profiled ring (2; 12; 22; 32; 52), made of a material chemically reacting with the rubber, is provided with a cover (4; 14; 24; 34; 54) consisting of a band-shaped or flat ring (4; 14; 24; 34; 54) completing profiled ring (2; 12; 22; 32; 52) into a laterally open profile, said ring (4; 14; 24; 34; 54) having a diameter such that under pretension it may be clamped on end (5a) of carcass inlet (5) inserted into the corresponding core ring (1; 11; 21; 31; 51) for holding the latter.

2. Pneumatic rubber tyre for vehicles as defined by claim 1,
**characterized in that**
flat ring (14; 24; 34) of the cover and profiled ring (22) are of form-locking design.

3. Pneumatic rubber tyre for vehicles as defined by either of claims 1 or 2,
**characterized in that**
profiled ring (2; 12; 22; 32; 52) and/or cover ring (4; 14; 24; 34; 54) are made of plastic material.

4. Pneumatic rubber tyre for vehicles as defined by either of claims 1 to 3,
**characterized in that**
profiled ring (2; 12; 22; 32; 52) and or cover (4; 14; 24; 34; 54) have an approximately uniform wall thickness of about 2 mm.

5. Pneumatic rubber tyre for vehicles as defined by either of claims 1 to 4,
**characterized in that**
profiled ring (22) and or cover ring (4; 54) are provided with passage apertures.

6. Pneumatic rubber tyre for vehicles as defined by claim 5,
**characterized in that**
cover ring (4; 54) is an open web or a screen.

7. Pneumatic rubber tyre for vehicles as defined by either of claims 1 to 6
**characterized in that**
in radial direction the section of coiling (3; 13; 23; 33; 53) is of smaller extent than in lateral direction.

8. Pneumatic rubber tyre for vehicles as defined by either of claims 1 to 7,
**characterized in that**

core material (30) consists of high-strength carbon or aramide fibers having for instance the form of rovings, filaments or yarn material.

9. Pneumatic rubber tyre for vehicles as defined by either of claims 1 to 8,
**characterized in that**
the components of each of core rings (1; 11; 21; 31) consist of a material having a similar or identical specific density as the rubber material of the pneumatic tyre.

10. Pneumatic rubber tyre for vehicles as defined by either of claims 1 to 9,
**characterized in that**
profiled ring (2; 12; 22; 32) forms a rounded-off cavity (7; 17; 27; 37) for receiving the extruded coil material (30) wound therein.

11. Pneumatic rubber tyre for vehicles as defined by claim 10,
**characterized in that**
cavity (7; 17; 27; 37) is partly filled with the coil of wound extruded material (30).

12. Pneumatic rubber tyre for vehicles as defined by either of claims 1 to 11,
**characterized in that**
the U-shaped or L-shaped section of profiled ring (2; 12; 22; 32) is provided at the leading edge of carcass inlet (5) with an upwardly extending flange (6; 16; 26; 36) and with rounded-off flanks.

13. Pneumatic rubber tyre for vehicles as defined by either of claims 1 to 12,
**characterized in that**
cover ring (54) is located such that between the latter and upwardly extending flange (56) at the leading edge of profiled ring (52), at which the carcass inlet runs up onto the profiled ring, is formed an opening (58) through which is returned the staved-in end (5a, 5b) of carcass inlet (5) in close proximity to the leading edge of carcass inlet (5c) (fig. 6).

14. Pneumatic rubber tyre for vehicles as defined by either of claims 1 to 13,
**characterized in that**
profiled ring (2; 12; 22; 32; 52) made of plastic material has a specific density ranging between 1 and 1.5, preferably at 1.2, and that the extruded material of coiling (3; 13; 23; 33; 53) has a specific density ranging between 1.3 and 2.6, preferably at 1.5.

15. Pneumatic rubber tyre for vehicles as defined by either of claims 1 to 14,

**characterized in that**
profiled ring (2; 12; 22; 32; 52) consists of PPE-containing material.

16. Method for preparing pneumatic rubber tyres for vehicles as defined by either of claims 1 to 15, comprising the operation step of embedding a core ring in each bead, around which is placed one side of the carcass inlet and integrating the complete component into rubber material and vulcanising the thus obtained tyre blank,
**characterized in that**
a coiling made of synthetic extruded material is placed into the profiled ring and that before winding into the profiled ring, the fiber material is impregnated with an initially liquid and subsequently gelating material vulcanising in the form of a matrix.

17. A method as defined by claim 16,
**characterized in that**
as material vulcanising into a matrix is used functionalized polybutadiene for preventing relative movement of the fibers and/or filaments.

18. A method as defined by either of claims 16 or 17,
**characterized in that**
before placing the carcass inlet, the surface of the profiled ring is coated with an SBR (styrene-butadiene-rubber)-containing material.

19. A method as defined by either of claims 16 to 18,
**characterized in that**
a carcass inlet comprising an SBR-containing rubber material is used.

20. A method as defined by either of claims 16 to 19,
**characterized in that**
after placing the coiling into the profiled ring an annular cover is placed on the coiling.

21. A method as defined by claim 20,
**characterized in that**
the cover is slipped in lateral or axial direction onto the profiled ring.

**Revendications**

1. Bandage pneumatique pour véhicules, comprenant une paire de boudins pouvant être placés sur la jante d'une roue de véhicule, dans lesquels est incorporé un noyau circulaire comprenant un anneau profilé (2; 12; 24; 32; 52) autour duquel est ancré une chemise de carcasse (5), dont l'une des extrémités est incorporée dans ledit bandage en caoutchouc, chacun des anneaux profilés (2; 12; 22; 32; 52) comportant une extrémité ouverte dans laquelle est incorporé un bobinage (3; 13; 23; 33; 53) consistant d'un matériau extrudé hautement résistant,
**caractérisé en ce que**
le matériau extrudé est composé de fibres et en ce que à l'extrémité ouverte de l'anneau profilé (2; 12; 22; 32; 52), consistant d'un matériau réagissant chimiquement avec le caoutchouc, est disposé une couverture (4; 14; 24; 34; 54) consistant d'un anneau (4; 14; 24; 34; 54) plat ou sous forme de bande procurant audit anneau profilé (2; 12; 22; 32; 52) un profil latéral ouvert, ledit anneau (4; 14; 24; 34; 54) ayant un diamètre tel qu'il peut être serré sous prétension sur l'extrémité (5a) insérée dans le noyau circulaire (1; 11; 21; 31; 51) associé de la carcasse (5) pour retenir cette dernière.

2. Bandage pneumatique pour véhicules suivant la revendication 1,
**caractérisé en ce que**
l'anneau plat (14; 24; 34) de la couverture et l'anneau profilé (22) sont conçus tels qu'ils peuvent être bloqués l'un par rapport à l'autre.

3. Bandage pneumatique pour véhicules suivant l'une des revendications 1 ou 2,
**caractérisé en ce que**
l'anneau profilé (2; 12; 22; 32; 52) et/ou l'anneau plat (4; 14; 24; 34; 54) sont réalisés dans une matière synthétique.

4. Bandage pneumatique pour véhicules suivant l'une des revendications 1 à 3,
**caractérisé en ce que**
l'anneau profilé (2; 12; 22; 32; 52) et/ou l'anneau plat (4; 14; 24; 34; 54) ont une épaisseur de paroi quasi-identique allant jusqu'à environ 2 mm.

5. Bandage pneumatique pour véhicules suivant l'une des revendications 1 à 4,
**caractérisé en ce que**
l'anneau profilé (22) et/ou l'anneau plat (4; 54) sont munis d'ouvertures de passage.

6. Bandage pneumatique suivant la revendication 5,
**caractérisé en ce que**
le couvercle circulaire (4; 54) est un tissu perforé ou un tamis.

7. Bandage pneumatique pour véhicules suivant l'une des revendications 1 à 6,

**caractérisé en ce que**
la section radiale du bobinage (3; 13; 23; 33; 53) est plus petite que sa section latérale.

8. Bandage pneumatique pour véhicules suivant l'une des revendications 1 à 7,
**caractérisé en ce que**
le matériau extrudé (30) consiste de fibres hautement résistantes, telles que des fibres de carbone ou d'aramide, par exemple sous forme de rovings, de fils ou de fibres.

9. Bandage pneumatique pour véhicules suivant l'une des revendications 1 à 8,
**caractérisé en ce que**
les composants de chaque noyau circulaire (1; 11; 21; 31) consistent d'une matière ayant un poids spécifique identique ou similaire à celui du caoutchouc du bandage pneumatique.

10. Bandage pneumatique pour véhicules suivant l'une des revendications 1 à 9,
**caractérisé en ce que**
l'anneau profilé (2; 12; 22; 32) forme une cavité arrondie (7; 17; 27; 37) recevant le bobinage en matière extrudée (30).

11. Bandage pneumatique pour véhicules suivant la revendication 10,
**caractérisé en ce que**
la cavité (7; 17; 27; 37) est partiellement remplie par le bobinage en matière extrudée (30).

12. Bandage pneumatique pour véhicules suivant l'une des revendications 1 à 11,
**caractérisé en ce que**
l'anneau profilé (2; 12; 22; 32) présente une section sous forme de L ou de U à l'entrée de la chemise de carcasse (5) avec une âme verticale (6; 16; 26; 36) et comporte des flancs arrondis.

13. Bandage pneumatique pour véhicules suivant l'une des revendications 1 à 12,
**caractérisé en ce que**
l'anneau plat (54) est disposé tel que entre celui-ci et l'âme verticale (56) à l'entrée de l'anneau profilé (52), à laquelle la chemise de carcasse accoste l'anneau profilé, se trouve une ouverture (58) par laquelle l'extrémité (5a, 5b) rabattue de la chemise de carcasse (5) est retournée à proximité immédiate de l'entrée (5c) de la chemise de carcasse (fig. 6).

14. Bandage pneumatique pour véhicules suivant l'une des revendications 1 à 13,
**caractérisé en ce que**
l'anneau profilé (2; 12; 22; 32; 52) composé de matière synthétique, présente un poids spécifique variant entre 1 et 1,5 et, de préférence, entre 1 et 1,2, et en ce que la matière extrudée du bobinage (3; 13; 23; 33; 53) présente un poids spécifique variant entre 1,3 et 2,6, et de préférence de 1,5.

15. Bandage pneumatique pour véhicules suivant l'une des revendications 1 à 14,
**caractérisé en ce que**
l'anneau profilé (2; 12; 22; 32; 52) est réalisé dans une matière comportant du PPE.

16. Procédé de fabrication de bandages pneumatiques pour véhicules suivant l'une des revendications 1 à 15, dans lequel un noyau circulaire est incorporé dans chacun des boudins autour duquel est disposé un côté de la chemise de carcasse et l'ensemble est incorporé dans un matériau en caoutchouc, et que l'ébauche de pneumatique pour véhicules ainsi réalisée est vulcanisée,
**caractérisé en ce que**
qu'un bobinage consistant d'une matière synthétique extrudée est incorporé dans l'anneau profilé et que, avant mise an place du bobinage dans l'anneau profilé, la matière fibreuse du bobinage est impregnée d'une matiére initialement liquide et ensuite gélifiante vulcanisant sous forme d'une matrice.

17. Procédé de fabrication suivant la revendication 16,
**caractérisé en ce que**
comme matière vulcanisant sous forme de matrice, est utilisée un polybutadiène fonctionnalisé afin d'éviter un glissement des fibres et/ou filaments l'un par rapport à l'autre.

18. Procédé de fabrication suivant l'une des revendications 16 ou 17,
**caractérisé en ce que**
avant la mise en place de la chemise de carcasse la surface de l'anneau profilé est enduite d'une matière contenant du SBR (styrène-butadiène-rubber).

19. Procédé de fabrication suivant l'une des revendications 16 à 18,
**caractérisé en ce que**
il est utilisé une chemise de carcasse réalisée dans un caoutchouc comprenant du SBR.

20. Procédé de fabrication suivant l'une des revendications 16 à 19,
**caractérisé en ce que**
après incorporation du bobinage dans l'anneau, profilé il est posé sur ledit bobinage une couverture sous forme d'un anneau.

21. Procédé de fabrication suivant la revendication 20,
**caractérisé en ce que**
la couverture est glissée sur celui-ci en direction latérale ou axiale de l'anneau profilé.

FIG.1

FIG.2

FIG.3

FIG.4

FIG.5

FIG.6

## FIG.7